# EUROPÄISCHE PATENTANMELDUNG

(11) **EP 1 657 536 A1**
(43) Veröffentlichungstag der Anmeldung: **17.05.2006**
(21) Anmeldenummer: 04026306.3
(22) Anmeldetag: 05.11.2004
(51) Int. Cl.: G01K 11/20, C23C 28/00, C23C 30/00, F01D 5/28

(54) **Anordnung mit mindestens einer Lumineszenz-Wärmedämmschicht auf einem Trägerkörper**

(71) Anmelder: SIEMENS AKTIENGESELLSCHAFT, 80333 München (DE)
(72) Erfinder: Bast, Ulrich, Dr., 81667 München (DE); Rossner, Wolfgang, Dr., 83607 Holzkirchen (DE)

(57) **Zusammenfassung**

Die Erfindung betrifft eine Anordnung mindestens einer Lumineszenz-Wärmedämmschicht (3) auf einem Trägerkörper (2) zur Eindämmung einer Wärmeübertragung zwischen dem Trägerkörper und einer Umgebung (7) des Trägerkörpers, wobei die Wärmedämmschicht zumindest einen Leuchtstoff aufweist, der mit Hilfe von Anregungslicht mit einer bestimmten Anregungswellenlänge zur Emission eines Lumineszenzlichtes mit einer bestimmten Lumineszenzwellenlänge angeregt werden kann, und wobei mindestens eine weitere Wärmedämmschicht (5) vorhanden ist, die im Wesentlichen frei ist von dem Leuchtstoff. Die Anordnung ist dadurch gekennzeichnet, dass die weitere Wärmedämmschicht für das Anregungslicht zur Anregung der Emission von Lumineszenzlicht und/oder für das Lumineszenzlicht des Leuchtstoffs im Wesentlichen opak ist. Der Leuchtstoff ist vorzugsweise ein aus der Gruppe aus der Gruppe Perowskit mit der Summenformel AA'O₃ und/oder Pyrochlor mit der Summenformel A₂B₂O₇ ausgewähltes Mischoxid ist, wobei A und A' jeweils ein dreiwertiges Metall und B ein vierwertiges Metall sind. Verwendung findet die Anordnung mit den Wärmedämmschichten vorzugsweise in einer Gasturbine, wobei auf einfache Weise ein Zustand der Wärmedämmschichten überprüft werden kann.

## Beschreibung

Die Erfindung betrifft eine Anordnung mindestens einer Wärmedämmschicht auf einem Trägerkörper zur Eindämmung einer Wärmeübertragung zwischen dem Trägerkörper und einer Umgebung des Trägerkörpers, wobei die Wärmedämmschicht zumindest einen Leuchtstoff aufweist, der mit Hilfe von Anregungslicht mit einer bestimmten Anregungswellenlänge zur Emission eines Lumineszenzlichtes mit einer bestimmten Lumineszenzwellenlänge angeregt werden kann, und wobei mindestens zwei weitere Wärmedämmschichten vorhanden sind, die im Wesentlichen frei sind von dem Leuchtstoff.

Eine derartige Anordnung sind aus der EP 1 105 550 B1 bekannt. Der Trägerkörper ist ein Bauteil einer Gasturbine. Der Trägerkörper ist aus einem Metall. Aufgrund einer in einer Gasturbine auftretenden hohen Temperatur von über 1200° C in der Umgebung des Bauteils kann es zu einer Schädigung des Metalls des Bauteils kommen. Um dies zu verhindern, ist auf dem Bauteil eine Wärmedämmschicht (Thermal Barrier Coating, TBC) aufgebracht. Die Wärmedämmschicht sorgt dafür, dass ein verminderter Wärmeaustausch zwischen dem Trägerkörper aus dem Metall und der Umgebung stattfindet. Dadurch heizt sich eine Metalloberfläche des Bauteils weniger stark auf. An der Metalloberfläche des Bauteils tritt eine Oberflächentemperatur auf, die niedriger ist als die Temperatur in der Umgebung des Bauteils.

Der Wärmedämmstoff bildet ein Basismaterial der Wärmedämmschicht. Die mechanischen und thermischen Eigenschaften der Wärmedämmschicht hängen im Wesentlichen von den Eigenschaften des Wärmedämmstoffs ab. Das Basismaterial der bekannten Wärmedämmschicht ist ein Metalloxid. Das Metalloxid ist beispielsweise ein mit Yttrium stabilisiertes Zirkoniumoxid (YSZ). Eine thermische Leitfähigkeit dieses Wärmedämmstoffs beträgt zwischen 1 W/m·K und 3 W/m·K. Um einen effizienten Schutz des Trägerkörpers zu gewährleisten, beträgt eine Schichtdicke der Wärmedämmschicht etwa 250 µm. Als Alternative zum mit Yttrium stabilisierten Zirkoniumoxid ist als Wärmedämmstoff ein Metalloxid in Form eines Yttriumaluminiumgranats angegeben.

Um die Wärmedämmschicht und den Trägerkörper fest zu verbinden, ist auf der Oberfläche des Bauteils eine metallische Zwischenschicht (Bond Coat) aus einer Metalllegierung aufgebracht. Zur Verbesserung der Verbindung kann zwischen der Wärmedämmschicht und dem Bauteil zusätzlich eine keramische Zwischenschicht aus einem keramischen Material, beispielsweise Aluminiumoxid, angeordnet sein.

In die Wärmedämmschicht ist ein so genannter Thermo-Lumineszenz-Indikator eingebettet. Dieser Indikator ist ein Leuchtstoff (Luminophor), der durch Anregung mit Anregungslicht einer bestimmten Anregungswellenlänge zur Emission eines Lumineszenzlichts mit einer bestimmten Emissionswellenlänge angeregt werden kann. Das Anregungslicht ist beispielsweise UV-Licht. Das Emissionslicht ist beispielsweise sichtbares Licht. Der verwendete Leuchtstoff ist ein so genannter Rekombinationsleuchtstoff. Durch elektronische Übergänge zwischen Energiezuständen des Aktivators wird der Leuchtvorgang hervorgerufen. Ein derartiger Leuchtstoff besteht beispielsweise aus einem Festkörper mit einem Kristallgitter (Wirtsgitter), in das ein so genannter Aktivator eingebettet ist. Der Festkörper ist mit dem Aktivator dotiert. Der Aktivator ist zusammen mit dem gesamten Festkörper am Leuchtvorgang des Leuchtstoffs beteiligt.

Bei der bekannten Wärmedämmschicht ist das jeweilige Basismaterial der Wärmedämmschicht mit einem Aktivator dotiert. Es liegt eine Wärmedämmschicht aus dem Leuchtstoff vor. Der dabei verwendete Aktivator ist jeweils ein Seltenerdelement. Im Fall des mit Yttrium stabilisierten Zirkoniumoxids ist das Seltenerdelement beispielsweise Europium. Der Wärmedämmstoff Yttriumaluminiumgranat ist mit den Seltenerdelementen Dysprosium oder Terbium dotiert.

Bei der bekannten Wärmedämmschicht wird die Tatsache ausgenutzt, dass eine Emissionseigenschaft des Lumineszenzlichts des Leuchtstoffs, beispielsweise eine Emissionsintensität oder eine Emissionsabklingzeit, von der Leuchtstofftemperatur des Leuchtstoffs abhängig ist. Aufgrund dieser Abhängigkeit wird auf die Temperatur der Wärmedämmschicht mit dem Leuchtstoff geschlossen. Damit dieser Zusammenhang hergestellt werden kann, ist die Wärmedämmschicht für das Anregungslicht im UV-Bereich optisch zugänglich. Gleichzeitig ist dafür gesorgt, dass das Lumineszenzlicht des Leuchtstoffs von der Wärmedämmschicht abgestrahlt und detektiert werden kann.

Um die optische Zugänglichkeit zu gewährleisten, ist beispielsweise auf dem Trägerkörper nur eine einzige Wärmedämmschicht mit dem Leuchtstoff angeordnet. Als alternative Lösung dazu wird auf der Wärmedämmschicht eine weitere Wärmedämmschicht aufgetragen, die für das Anregungslicht und das Lumineszenzlicht des Leuchtstoffs transparent ist. Das Lumineszenzlicht des Leuchtstoffs kann durch die weitere Wärmedämmschicht hindurchtreten.

Um den Zustand der Wärmedämmschicht zu überprüfen, ist ein relativ komplizierter Aufbau zur Anregung des Leuchtstoffs und zur Detektion des Lumineszenzlichts des Leuchtstoffs notwendig.

Aufgabe der vorliegenden Erfindung ist es daher, eine Anordnung mit einer Wärmedämmschicht mit lumineszierenden Wärmedämmstoff anzugeben, die eine einfache Bestimmung eines Zustandes der Wärmedämmschicht auf einem Trägerkörper erlaubt.

Zur Lösung der Aufgabe wird eine Anordnung einer Lumineszenz-Wärmedämmschicht auf einem Trägerkörper zur Eindämmung einer Wärmeübertragung zwischen dem Trägerkörper und einer Umgebung des Trägerkörpers angegeben, wobei die Lumineszenz-Wärmedämmschicht zumindest einen Leuchtstoff aufweist, der mit Hilfe von Anregungslicht mit einer bestimmten Anregungswellenlänge zur Emission eines Lumineszenzlichtes mit einer bestimmten Lumineszenzwellenlänge angeregt werden kann, und wobei mindestens zwei weitere Wärmedämmschichten vorhanden sind, die im Wesentlichen frei sind von dem Leuchtstoff. Dabei ist die Lumineszenz-Wärmedämmschicht zwischen den weiteren Wärmedämmschichten angeordnet.

Die Lumineszenz-Wärmedämmschicht mit dem Leuchtstoff kann dabei einphasig oder mehrphasig vorliegen. Einphasig bedeutet, dass eine vom Wärmedämmstoff gebildete keramische Phase der Lumineszenz-Wärmedämmschicht im Wesentlichen nur aus dem Leuchtstoff besteht. Der Wärmedämmstoff der Lumineszenz-Wärmedämmschicht ist der Leuchtstoff. Bei einer mehrphasigen Wärmedämmschicht sind der Wärmedämmstoff und der Leuchtstoff unterschiedlich. Im Wärmedämmstoff sind Leuchtstoffpartikel aus dem Leuchtstoff enthalten. Die keramische Phase wird von unterschiedlichen Materialien gebildet. Vorzugsweise sind die Leuchtstoffpartikel homogen über die Wärmedämmschicht verteilt. Darüber hinaus ist es vorteilhaft, wenn der Wärmedämmstoff und der Leuchtstoff aus einer im Wesentlichen gleichen Art Festkörper bestehen. Beide Stoffe unterscheiden sich lediglich durch ihre optischen Eigenschaften. Dazu ist der Leuchtstoff beispielsweise dotiert.

Die Anordnung ist in einer besonderen Ausgestaltung gekennzeichnet, dass die äußere weitere Wärmedämmschicht für das Anregungslicht zur Anregung der Emission von Lumineszenzlicht und/oder für das Lumineszenzlicht des Leuchtstoffs im Wesentlichen opak ist, so dass das Anregungslicht des Leuchtstoffs und/oder das Lumineszenzlicht des Leuchtstoffs im Wesentlich nur durch Öffnungen der weiteren Wärmedämmschicht in die Umgebung des Trägerkörpers gelangen kann. Derartige Öffnungen sind beispielsweise Risse oder Spalte in der weiteren Wärmedämmschicht. Denkbar ist auch eine Öffnung, die durch Erosion (Abtrag) von weiterem Wärmedämmstoff der weiteren Wärmedämmschicht entstanden ist. Diese Öffnungen können einfach sichtbar gemacht werden. Das Sichtbarmachen gelingt durch Beleuchten der Anordnung mit dem Anregungslicht. An den Stellen, an denen das UV-Licht durch die Öffnungen auf die Wärmedämmschicht mit dem Leuchtstoff gelangt, wird der Leuchtstoff zur Emission des Lumineszenzlichts angeregt. Das Lumineszenzlicht gelangt wieder durch die Öffnungen in die Umgebung des Trägerkörpers und kann dort detektiert werden. Aufgrund der Öffnungen tritt ein Lumineszenzlicht auf, das sich bezüglich seiner Intensität deutlich von Untergrund abhebt.

Opak bedeutet in diesem Fall, dass das Anregungslicht und/oder das Lumineszenzlicht aufgrund der Transmissions- bzw. Absorptionseigenschaften der weiteren Wärmedämmschicht durch die weitere Wärmedämmschicht nicht oder nahezu nicht hindurchtreten können. Im Wesentlichen bedeutet dabei, dass unter Umständen eine geringe Durchlässigkeit für das Anregungslicht und/oder das Lumineszenzlicht gegeben ist.

Auf dem beschriebenen Weg kann während einer Betriebspause einer Vorrichtung die Wärmedämmschicht eines in der Vorrichtung eingesetzten Trägerkörpers auf einfache und sichere Weise überprüft werden. Die Vorrichtung ist beispielsweise eine Gasturbine. Der Trägerkörper ist beispielsweise eine Turbinenschaufel der Gasturbine. Auf der Turbinenschaufel befindet sich der Mehrschichtaufbau mit den Wärmedämmschichten. Durch Beleuchten der Turbinenschaufel und Beobachten des Lumineszenzlichts des Leuchtstoffs werden diejenigen Stellen der weiteren, äußersten Wärmedämmschicht sichtbar, die Öffnungen aufweisen.

Denkbar ist aber auch, dass eine Überprüfung des Zustands der Wärmedämmschicht während des Betriebs der Vorrichtung durchgeführt wird. Dazu ist beispielsweise eine Brennkammer der oben beschriebenen Gasturbine, in der die Turbinenschaufeln eingesetzt werden, mit einem Fenster versehen, durch das die Lumineszenz des Leuchtstoffs beobachtet werden kann. Das Auftreten von Lumineszenzlicht ist ein Hinweis darauf, dass die weitere, äußerste Wärmedämmschicht mindestens einer Turbinenschaufel einen Riss oder einen Spalt aufweist bzw. erodiert ist.

Ein weiterer Vorteil der beschriebenen Anordnung besteht darin, dass infolge einer fortgeschrittenen Erosion auch Wärmedämmstoff mit dem Leuchtstoff abgetragen wird. In einem Abgas der Gasturbine kann durch entsprechende Detektoren der Leuchtstoff nachgewiesen werden. Das ist ein Zeichen dafür, dass die Erosion bis zur Wärmedämmschicht mit dem Leuchtstoff vorangeschritten ist.

Als Leuchtstoff ist jeder beliebige keramische Leuchtstoff denkbar, der in einer Wärmedämmschicht eingesetzt werden kann. In einer besonderen Ausgestaltung weist der Leuchtstoff mindestens ein Metalloxid mit mindestens einem dreiwertigen Metall A auf. Ein derartiger Leuchtstoff ist beispielsweise ein mit einem Aktivator dotiertes, mit Yttrium stabilisiertes oder teilstabilisiertes Zirkoniumoxid. Insbesondere denkbar sind auch Leuchtstoffe in Form von Perowskiten und Pyrochloren.

Die genannten Leuchtstoffe sind so genannte Rekombinationsleuchtstoffe. Die Emission des Lumineszenzlichts beruht dabei vorzugsweise auf der Anwesenheit eines Aktivators. Mit Hilfe eines Aktivators oder mehrerer Aktivatoren kann die Emissionseigenschaft des Leuchtstoffs, beispielsweise die Emissionswellenlänge und die Emissionsintensität, relativ einfach variiert werden.

In einer besonderen Ausgestaltung weist der Leuchtstoff zur Anregung der Emission von Lumineszenzlicht einen aus der Gruppe Cer und/oder Europium und/oder Dysprosium und/oder Terbium ausgewählten Aktivator auf. Seltenerdelemente lassen sich im allgemeinen aufgrund ihrer Ionenradien sehr gut in die Kristallgitter von Metalloxiden wie Perowskite und Pyrochlore einbauen. Daher eignen sich Aktivatoren in Form von Seltenerdelementen generell. Als besonders gute Aktivatoren haben sich die aufgezählten Seltenenerdelemente erwiesen.

Bei Verwendung eines Aktivators ist dessen Anteil im Leuchtstoff derart gewählt, dass die thermischen und mechanischen Eigenschaften des Metalloxids des Leuchtstoffs nahezu unbeeinflusst sind. Die mechanischen und thermischen Eigenschaften des Metalloxids bleiben trotz Dotierung erhalten. In einer besonderen Ausgestaltung ist der Aktivator mit einem Anteil von bis zu 10 mol% im Leuchtstoff enthalten. Vorzugsweise beträgt der Anteil unter 2 mol%. Beispielsweise ist der Anteil 1 mol%. Es hat sich gezeigt, dass dieser niedrige Anteil des Aktivators ausreicht, um eine verwertbare Emissionsintensität des Leuchtstoffs zu erzielen. Die thermische und mechanische Stabilität einer mit dem Leuchtstoff hergestellten Wärmedämmschicht bleibt dabei erhalten.

In einer besonderen Ausgestaltung ist das Metalloxid des Leuchtstoffs ein aus der Gruppe Perowskit mit der Summenformel AA'O₃ und/oder Pyrochlor mit der Summenformel A₂B₂O₇ ausgewähltes Mischoxid, wobei A' ein dreiwertiges Metall und B ein vierwertiges Metall sind. Eine Wärmedämmschicht aus einem Perowskit und/oder einem Pyrochlor (Pyrochlorphase) zeichnet sich durch eine hohe Stabilität gegenüber Temperaturen von über 1200° C aus. Damit eignet sich die Anordnung für neue Gasturbinengenerationen, bei denen ein erhöhter Wirkungsgrad durch Erhöhung der Einsatztemperatur erzielt werden soll.

In einer besonderen Ausgestaltung ist das dreiwertige Metall A und/oder das dreiwertige Metall A' ein Seltenerdelement Re. Das dreiwertige Metall A und/oder das dreiwertige Metall A' ist insbesondere ein aus der Gruppe Lanthan und/oder Gadolinium und/oder Samarium ausgewähltes Seltenerdelement. Weitere Seltenerdelemente sind ebenfalls denkbar. Durch die Verwendung eines Perowskits und/oder eines Pyrochlors mit diesen Seltenerdelementen kann ein Aktivator in Form eines Seltenerdelements aufgrund der ähnlichen Ionenradien sehr leicht in das Kristallgitter des Perowskits bzw. des Pyrochlors eingebaut werden.

Eines der dreiwertigen Metalle A und A' des Perowskits ist ein Hauptgruppen- oder Nebengruppenelement. Das vierwertige Metall B des Pyrochlors ist ebenfalls ein Haupt- oder Nebengruppenelement. In beiden Fällen können Mischungen unterschiedlicher Haupt- und Nebengruppenelemente vorgesehen sein. Aufgrund der unterschiedlichen Ionenradien nehmen die Seltenerdelemente und die Haupt- bzw. Nebengruppenelemente bevorzugt unterschiedliche Plätze im Perowskit- bzw. Pyrochlor-Kristallgitter ein. Als besonders vorteilhaft hat sich dabei als dreiwertiges Hauptgruppenelement Aluminium erwiesen. Zusammen mit Seltenerdelementen bildet Aluminium beispielsweise ein Perowskit, das zu einer mechanisch und thermisch stabilen Wärmedämmschicht führt. In einer besonderen Ausgestaltung ist der Perowskit daher ein Seltenerdaluminat. Die Summenformel lautet ReAlO₃, wobei Re für eine Seltenerdelement steht. Vorzugsweise ist das Seltenerdaluminat ein Gadolinium-Lanthan-Aluminat. Die Summenformel lautet beispielsweise Gd_{0,25}La_{0,75}AlO₃. Als vierwertiges Metall B des Pyrochlors werden insbesondere die Nebengruppenelemente Hafnium und/oder Titan und/oder Zirkonium eingesetzt. Der Pyrochlor ist daher vorzugsweise aus der Gruppe Seltenerdtitanat und/oder Seltenerdhafnat und/oder Seltenerdzirkonat ausgewählt. Insbesondere ist das Seltenerdzirkonat aus der Gruppe Gadoliniumzirkonat und/oder Samariumzirkonat ausgewählt. Die bevorzugten Summenformeln lauten Gd₂Zr₂O₇ und Sm₂Zr₂O₇. Das Seltenerdhafnat ist bevorzugt Lanthanhafnat. Die Summenformel lautet La₂Hf₂O₇.

Die Anregung des Leuchtstoffs zur Emission von Lumineszenzlicht erfolgt optisch. Dabei wird der Leuchtstoff mit Anregungslicht einer bestimmten Anregungswellenlänge angestrahlt. Durch Absorption des Anregungslichts wird der Leuchtstoff zur Emission von Lumineszenzlicht angeregt. Das Anregungslicht ist beispielsweise UV-Licht und das Lumineszenzlicht niederenergetischeres, sichtbares Licht.

Die Anregung des Leuchtstoffs mit Anregungslicht eignet sich zur Überprüfung eines Zustandes einer für das Anregungslicht und das Lumineszenzlicht optisch zugängliche Wärmedämmschicht mit dem Leuchtstoff. Dazu ist beispielsweise nur die Wärmedämmschicht mit dem Leuchtstoff auf dem Trägerkörper aufgetragen.

In einer besonderen Ausgestaltung ist der Trägerkörper ein Bauteil einer Verbrennungskraftmaschine. Die Brennkraftmaschine ist beispielsweise ein Dieselmotor. In einer besonderen Ausgestaltung ist die Verbrennungskraftmaschine eine Gasturbine. Der Trägerkörper kann dabei eine Kachel sein, mit der eine Brennkammer der Gasturbine ausgekleidet ist. Insbesondere ist der Trägerkörper eine Turbinenschaufel der Gasturbine. Denkbar ist dabei, dass die unterschiedlichen Trägerkörper mit Wärmedämmschichten mit Leuchtstoffen versehen sind, die unterschiedliches Lumineszenzlicht emittieren. So kann auf einfache Weise das Bauteil bestimmt werden, an dem Schäden vorhanden sind.

Zum Aufbringen der Wärmedämmschicht und der weiteren Wärmedämmschicht kann ein beliebiges Beschichtungsverfahren durchgeführt werden. Das Beschichtungsverfahren ist insbesondere ein Plasmaspritzverfahren. Das Beschichtungsverfahren kann auch ein Dampfabscheideverfahren sein, beispielsweise PVD (Physical Vapour Deposition) oder CVD (Chemical Vapour Deposition). Mit Hilfe der genannten Verfahren werden Wärmedämmschichten mit Schichtdicken von 50 *µ*m bis 600 *µ*m und mehr aufgetragen.

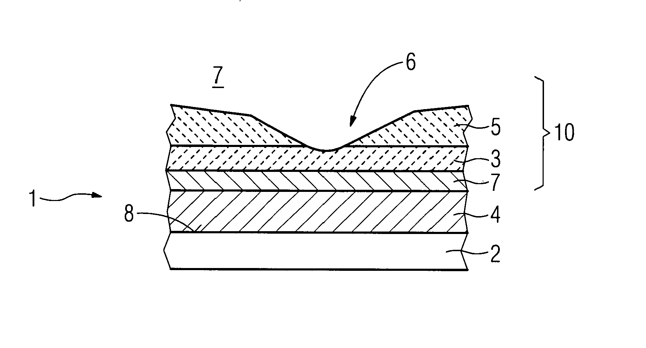

Anhand mehrerer Ausführungsbeispiele und einer dazugehörigen Figur wird die Erfindung im Folgenden näher erläutert. Die Figur ist schematisch und stellt keine maßstabsgetreuen Abbildungen dar.

Die Figur zeigt einen Ausschnitt eines seitlichen Querschnitts einer Anordnung einer Lumineszenz-Wärmedämmschicht aus einem Wärmedämmstoff mit einem Leuchtstoff und zwei weiteren Wärmedämmschichten mit einem weiteren Wärmedämmstoff von der Seite.

Die Anordnung 1 besteht aus einem Trägerkörper 2, auf dem eine Lumineszenz-Wärmedämmschicht 3 und weitere, hier bspw. zwei Wärmedämmschichten 5, 7 angeordnet sind.
Der Trägerkörper 2 ist beispielsweise eine Turbinenschaufel einer Gasturbine. Die Turbinenschaufel beispielsweise ist aus einem Metall. In der Brennkammer der Gasturbine, die die Umgebung 7 des Trägerkörpers 2 darstellt, können im Betrieb der Gasturbine Temperaturen von über 1200° C auftreten. Um ein Überhitzen der Oberfläche 8 des Trägerkörpers 2 zu verhindern, ist die Wärmedämmschicht 10 vorhanden. Die Wärmedämmschicht 10 dient der Eindämmung einer Wärmeübertragung zwischen dem Trägerkörper 2 und der Umgebung 7 des Trägerkörpers 2.

Es liegt ein Mehrschichtaufbau vor mit der Wärmedämmschicht 10, einer metallischen Zwischenschicht 4 (Bond Coat) aus einer Metalllegierung, einer Lumineszenz-Wärmedämmschicht 3 und weiteren Wärmedämmschichten 5, 7. Die Lumineszenz-Wärmedämmschicht 3 mit dem Leuchtstoff ist zwischen den weiteren Wärmedämmschichten 5, 7 angeordnet. Insbesondere ist nur eine einzige Lumineszenz-Wärmedämmschicht 3 vorhanden.

Die weitere äußere Wärmedämmschicht 5 ist beispielsweise für das Anregungslicht und/oder das Lumineszenzlicht des Leuchtstoffs opak. Nur wenn die weitere Wärmedämmschicht 5 eine Öffnung 6 aufweist, kann das Lumineszenzlicht des Leuchtstoffs in der Umgebung 7 des Trägerkörpers 2 detektiert werden.

### Beispiel 1:

Der Wärmedämmstoff der Lumineszenz-Wärmedämmschicht 3 ist ein Metalloxid in Form eines Seltenerdaluminats mit der Summenformel Gd_{0,25}La_{0,75}AlO₃. Gemäß einer ersten Ausführungsform ist das Seltenerdaluminat mit 1 mol% Eu₂O₃ versetzt. Das Seltenerdaluminat weist den Aktivator Europium mit einem Anteil von 1 mol% auf. Durch Anregung des Leuchtstoffs mit UV-Licht resultiert ein rotes Lumineszenzlicht mit einem Emissionsmaximum bei etwa 610 nm. Die Anregungswellenlänge beträgt beispielsweise 254 nm.

Gemäß einer dazu alternativen Ausführungsform ist das Seltenerdaluminat mit 1 mol% Terbium dotiert. Es resultiert ein Leuchtstoff mit grünem Lumineszenzlicht mit einer Emissionswellenlänge bei etwa 544 nm.

### Beispiel 2:

Die Lumineszenz-Wärmedämmschicht 3 besteht aus einem Pyrochlor. Der Pyrochlor ist ein Gadoliniumzirkonat mit der Summenformel Gd₂Zr₂O₇. Zum Herstellen des Leuchtstoffs wird der Pyrochlor mit 1 mol% Eu₂O₃ versetzt. Das Gadoliniumzirkonat weist den Aktivator Europium mit einem Anteil von 1 mol% auf.

### Beispiel 3:

Die Lumineszenz-Wärmedämmschicht 3 besteht aus einem mit Yttrium stabilisierten Zirkoniumoxid. Zum Herstellen des Leuchtstoffs wird das mit Yttrium stabilisierte Zirkoniumoxid mit 1 mol% Eu₂O₃ versetzt. Das mit Yttrium stabilisierte Zirkoniumoxid weist den Aktivator Europium mit einem Anteil von 1 mol% auf.

Die Wärmedämmstoffe der weiteren Wärmedämmschichten 5, 7 entsprechen beispielsweise dem der Lumineszenz-Wärmedämmschicht 3 ohne Dotierung, können aber auch aus anderen Materialien bestehen.

Die Wärmedämmstoffe der weiteren Wärmedämmschichten 5, 7 können gleich oder verschieden sein.

## Patentansprüche

1. Anordnung einer Lumineszenz-Wärmedämmschicht (3) auf einem Trägerkörper (2) zur Eindämmung einer Wärmeübertragung zwischen dem Trägerkörper (2) und einer Umgebung (7) des Trägerkörpers (2),
wobei die Lumineszenz-Wärmedämmschicht (3) zumindest einen Leuchtstoff aufweist,
der mit Hilfe von Anregungslicht mit einer bestimmten Anregungswellenlänge zur Emission eines Lumineszenzlichtes mit einer bestimmten Lumineszenzwellenlänge angeregt werden kann,
**dadurch gekennzeichnet,**
**dass** zumindest zwei weitere Wärmedämmschichten (5, 7) vorhanden sind,
die im Wesentlichen frei sind von dem Leuchtstoff und dass die Lumineszenz-Wärmedämmschicht (3) zwischen den weiteren Wärmedämmschichten (5, 7) angeordnet ist.

2. Anordnung nach Anspruch 1,
wobei zumindest eine der weiteren Wärmedämmschichten (5, 7) für das Anregungslicht zur Anregung der Emission von Lumineszenzlicht und/oder für das Lumineszenzlicht des Leuchtstoffs im Wesentlichen opak ist.

3. Anordnung nach Anspruch 1 oder 2,
wobei die äußere weitere Wärmedämmschicht (5) opak ist, so dass das Lumineszenzlicht des Leuchtstoffs im Wesentlichen nur durch Öffnungen (6) der weiteren Wärmedämmschicht (5) in die Umgebung (7) des Trägerkörpers (2) gelangen kann.

4. Anordnung nach Anspruch 1, 2 oder 3,
wobei nur eine einzige Lumineszenz-Wärmedämmschicht (3) vorhanden ist.

5. Anordnung nach Anspruch 1, 2, 3 oder 4,
wobei nur zwei weitere Wärmedämmschichten (5, 7) vorhanden sind.

6. Anordnung nach Anspruch 1, 2 oder 3,
wobei der Leuchtstoff mindestens ein Metalloxid mit mindestens einem dreiwertigen Metall A aufweist.

7. Anordnung nach einem der Ansprüche 1 bis 3 oder 6,
wobei der Leuchtstoff zur Anregung der Emission des Lumineszenzlichts einen aus der Gruppe Cer und/oder Europium und/oder Dysprosium und/oder Terbium ausgewählten Aktivator aufweist.

8. Anordnung nach einem der Ansprüche 1 bis 3, 6 oder 7,
wobei der Aktivator mit einem Anteil von bis zu 10 mol% im Leuchtstoff enthalten ist.

9. Anordnung nach einem der Ansprüche 6 bis 8,
wobei das Metalloxid ein aus der Gruppe Perowskit mit der Summenformel AA'O₃ und/oder Pyrochlor mit der Summenformel A₂B₂O₇ ausgewähltes Mischoxid ist, wobei A' ein dreiwertiges Metall und B ein vierwertiges Metall sind.

10. Anordnung nach einem der Ansprüche 1, 6 bis 9,
wobei das dreiwertige Metall A und/oder das dreiwertige Metall A' ein Seltenerdelement Re ist.

11. Anordnung nach Anspruch 10,
wobei das dreiwertige Metall A und/oder das dreiwertige Metall A' ein aus der Gruppe Lanthan und/oder Gadolinium und/oder Samarium ausgewähltes Seltenerdelement ist.

12. Anordnung nach einem der Ansprüche 9 bis 11,
wobei der Perowskit ein Seltenerdaluminat ist.

13. Anordnung nach Anspruch 12,
wobei die Summenformel des Seltenerdaluminats Gd_{0,25}La_{0,75}AlO₃ ist.

14. Anordnung nach einem der Ansprüche 9 bis 13,
wobei der Pyrochlor aus der Gruppe Selterdhafnat und/oder Seltenerdtitanat und/oder Seltenerdzirkonat ausgewählt ist.

15. Anordnung nach Anspruch 14,
wobei das Seltenerdzirkonat aus der Gruppe Gadoliniumzirkonat und/oder Samariumzirkonat ausgewählt ist.

16. Anordnung nach Anspruch 14,
wobei das Seltenerdhafnat Lanthanhafnat ist.

17. Anordnung nach einem der Ansprüche 1 bis 16,
wobei der Trägerkörper ein Bauteil einer Verbrennungskraftmaschine ist.

18. Anordnung nach Anspruch 17,
wobei die Verbrennungskraftmaschine eine Gasturbine ist.
